# EUROPEAN PATENT APPLICATION

(11) **EP 4 778 814 A1**
(43) Date of publication of application: **22.07.2026**
(21) Application number: 26152032.4
(22) Date of filing: 15.01.2026
(51) Int. Cl.: B62J 7/02, B62J 11/10, B62J 43/13, B62J 43/23, B62J 43/28, B62K 19/40, B62K 3/04

(54) **BICYCLE WITH STORAGE SYSTEM**

(30) Priority: 17.01.2025 US 202563746450 P
(71) Applicant: Specialized Bicycle Components, Inc., Morgan Hill, CA 95037 (US)
(72) Inventor: PALLURE, Marc, Morgan Hill, 95037 (US); BUCKLEY, Joseph Edward, Morgan Hill, 95037 (US); CABELLO, Jose Daniel Rueda, Morgan Hill, 95037 (US); SONDEREGGER, Marco Werner, Morgan Hill, 95037 (US); KANDITT, Ron, Morgan Hill, 95037 (US)
(74) Representative: Forresters IP LLP

(57) **Abstract**

A bicycle (10) including a front wheel (18), a rear wheel (22), and a frame (14) coupled to and supported by the front wheel (18) and the rear wheel (22). The frame (14) has a frame member with a cavity (96) defined therein. The bicycle (10) further includes a bracket (110) coupled to the frame member and disposed within the cavity (96). The bracket (110) has a magnetic member (134). Moreover, the bicycle (10) includes a container (114) disposed within the cavity (96). The container (114) is attachable to the magnetic member (134) to be secured within the cavity (96).

## Description

### CROSS-REFERENCE TO RELATED APPLICATIONS

This application claims priority to U.S. Provisional Application No. 63/746,450, filed January 17, 2025.

### BACKGROUND

The present disclosure relates to systems for storing items within a bicycle frame.

### BRIEF DESCRIPTION OF DRAWINGS

FIG. 1 is a side view of a bicycle according to one embodiment.
FIG. 2 is a perspective view of the bicycle of FIG. 1, illustrating an opening into a cavity in a frame member for insertion of a battery.
FIG. 3 is a partial, perspective view of the bicycle of FIG. 1, with a cover attached over the cavity.
FIG. 4 is a partial side section view of the bicycle of FIG. 1 with portions removed, illustrating a storage system within the frame member.
FIG. 5 is a partial, enlarged side section view of the bicycle of FIG. 1, with portions removed, further illustrating a bracket and a container of the storage system.
FIG. 6 is a partial, enlarged side section view of the bicycle of FIG. 1, without the container of FIG. 5.
FIG. 7A is a front perspective view of the bracket of FIG. 5.
FIG. 7B is a rear perspective view of the bracket of FIG. 5.
FIG. 7C is a bottom perspective view of the bracket of FIG. 5.
FIG. 7D is an exploded view of the bracket of FIG. 5.
FIG. 8A is a front perspective view of the container of FIG. 5.
FIG. 8B is a rear perspective view of the container of FIG. 5.

### DETAILED DESCRIPTION

Before any examples are explained in detail, it is to be understood that the disclosure is not limited in its application to the details of construction and the arrangement of components set forth in the following description or illustrated in the following drawings. The disclosure is capable of other examples and of being practiced or of being carried out in various ways.

In one example, a bicycle includes a front wheel, a rear wheel, and a frame coupled to and supported by the front wheel and the rear wheel. The frame has a frame member with a cavity defined therein. The bicycle further includes a bracket coupled to the frame member and disposed within the cavity. The bracket has a magnetic member. The bicycle also includes a container disposed within the cavity. The container is attachable to the magnetic member to be secured within the cavity.

In another example, a bicycle includes a front wheel, a rear wheel, and a frame coupled to and supported by the front wheel and the rear wheel. The frame has a frame member with a cavity defined therein. The bicycle further includes a bracket coupled to the frame member and disposed within the cavity. The bracket has a magnetic member and a cable routing channel configured to rout at least one cable through the frame member.

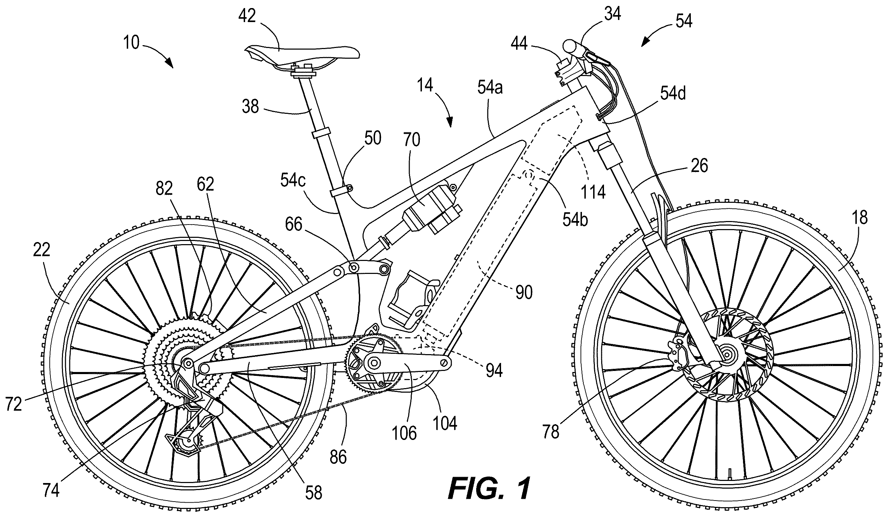

FIGS. 1-3 illustrate a bicycle 10. While the illustrated bicycle 10 is a mountain bicycle, the bicycle 10 may be any type of bicycle, including a road bicycle, a gravel bicycle, or any other type of bicycle. Additionally, while the illustrated bicycle 10 is an electric bicycle ("ebike") powered partially or entirely by an electric motor, in other examples the bicycle 10 may be a non-electric bicycle (i.e., powered only by manual movement of pedals).

As illustrated in FIGS. 1-3, the bicycle 10 may include a frame 14, a front wheel 18, and a rear wheel 22. The frame 14 may be coupled to and supported on the front wheel 18 and the rear wheel 22.

With continued reference to FIGS. 1-3, the bicycle 10 may include a front fork 26 (e.g., coupled to and supported by the front wheel 18), a handlebar 34, a seat post 38, and/or a saddle 42. The handlebar 34 may be coupled to the front fork 26 by a stem 44. The handlebar 34 may be configured to be grasped by a user. The front wheel 18, the rear wheel 22, and/or the handlebar 34 may be used to steer the bicycle 10 when riding the bicycle 10.

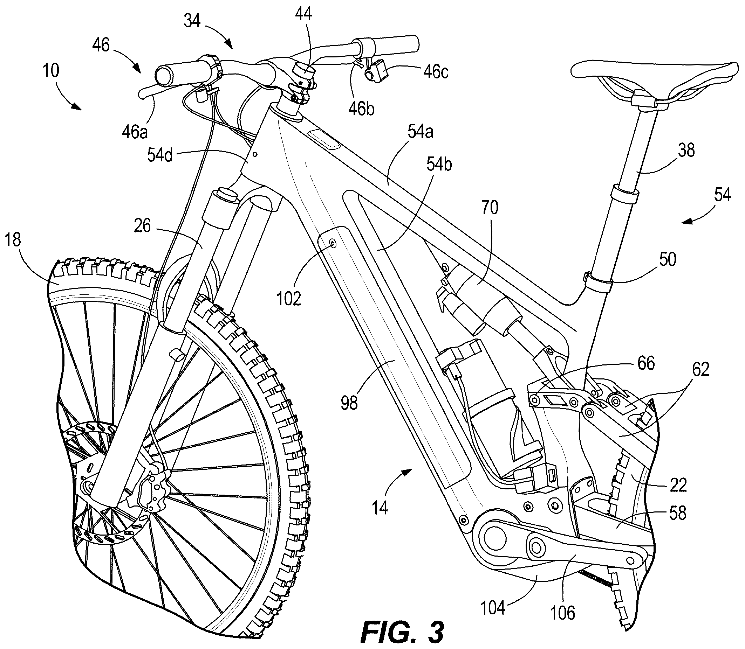

In some embodiments, the bicycle 10 may include a plurality of control devices 46 (FIG. 3) configured to be operated by the user when riding the bicycle 10. The plurality of control devices 46 may include, for example, a front brake lever 46a, a rear brake lever 46b, a shifter 46c, and/or other user operated devices (e.g., a dropper post remote control, an electric bicycle remote control, etc.) that may control the bicycle 10 and provide operating parameters of the bicycle 10 and/or display information to a user of bicycle 10. Other embodiments of the bicycle 10 may include other numbers, types, and arrangements of control devices than that illustrated, including control devices that are not located on the handlebar 34.

With continued reference to FIGS. 1-3, the bicycle 10 may include a seat post clamp 50. The seat post 38 may be movably coupled to the frame 14 such that a height of the saddle 42 relative to the frame 14 may be adjustable by the user when using the seat post clamp 50. The saddle 42 may be coupled to the seat post 38, and may be configured to support the user riding the bicycle 10.

The frame 14 of the bicycle 10 may be formed by multiple tube members 54a-d. For example, the frame 14 may be formed by a top tube member 54a, a down tube member 54b, a seat tube member 54c, and/or a head tube member 54d. The top tube member 54a may be coupled to and disposed between the seat tube member 54c and the head tube member 54d. The down tube member 54b may be coupled to the top tube member 54a and the head tube member 54d such that the down tube member 54b extends from the top tube member 54a at an oblique angle relative to the top tube member 54a. The head tube member 54d may be disposed between the front fork 26 and the handlebar 34 to interconnect the front fork 26 with the handlebar 34. As such, the user may move the front wheel 18 when steering the bicycle 10 in a desired direction via the handlebar 34. Other embodiments of the bicycle 10 may include other numbers, arrangements, and orientations of frame tube members than that illustrated.

With continued reference to FIGS. 1-3, in some embodiments the frame 14 may include at least one chain stay member 58 and/or at least one seat stay member 62 that are configured to couple the rear wheel 22 to the frame 14. The chain stay member 58 may be coupled to (e.g., pivotally coupled to) and disposed between the seat tube member 54c and the seat stay member 62. The seat stay member 62 may be disposed between the seat tube member 54c and the chain stay member 58. In some embodiments, the seat stay member 62 may be coupled to the rear wheel 22 and pivotably coupled to the seat tube member 54c by a linkage 66. The linkage 66 may also be coupled to a rear shock mechanism 70 that is pivotably attached to the top tube member 54a. As such, the seat stay member 62 may be interconnected to the rear shock mechanism 70 by the linkage 66 so that the rear shock mechanism 70 absorbs impact experienced by the rear wheel 22 during operation of the bicycle 10. In other embodiments, the bicycle 10 may include other numbers and arrangements of chain stay members, seat stay members, linkages, and shock mechanisms than that illustrated. In some examples, the bicycle 10 may not include any linkages (e.g., for pivotable coupling of frame components), and/or may not include any shock mechanisms.

With continued reference to FIGS. 1-3, in some embodiments the bicycle 10 may include a derailleur hanger 72, a rear derailleur 74, a front brake caliper 78, and/or a rear brake caliper 82. The derailleur hanger 72 may be coupled to the seat stay member 62. The rear derailleur 74 may be coupled to the derailleur hanger 72, and thereby interconnected to the frame 14 via the derailleur hanger 72. The rear derailleur 74 may be configured to change a gear at which the bicycle 10 operates at a location proximate the rear wheel 22. The user may operate the shifter 46c during operation of the bicycle 10 to perform a gear changing operation. As such, the shifter 46c may be configured to actuate the rear derailleur 74 to thereby adjust a chain 86 and change the gear. In other embodiments, the bicycle 10 may include other numbers and arrangements of derailleur hangers and derailleurs than that illustrated, or may not include a derailleur hanger or derailleur.

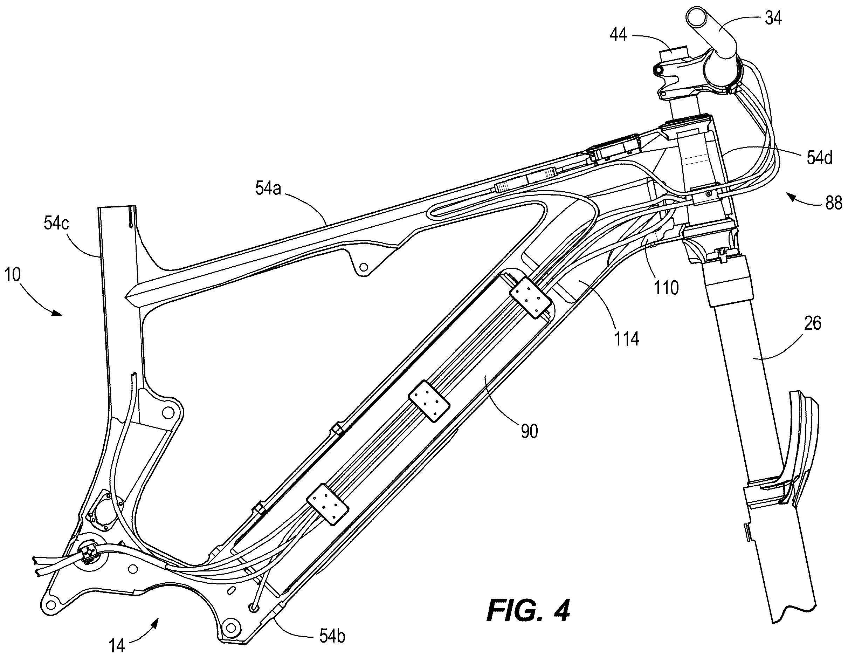

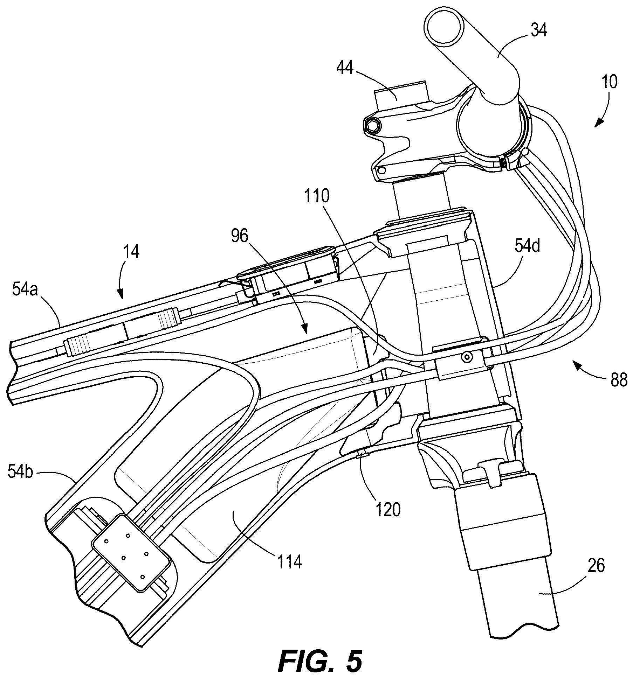

With reference to FIGS. 4 and 5, in some embodiments the top tube member 54a, the down tube member 54b, the seat tube member 54c, and/or the head tube member 54d of the frame 14 may be formed as hollow frame members. The hollow frame members of the frame 14 may be provided to retain one or more cables 88 (e.g., one or more brake cables, one or more shifting cables, one or more electrical cables, etc.) within the bicycle 10. In many examples, at least one of one or more cables 88 may be coupled to at least one of the control devices 46.

One of the frame members (e.g., the down tube member 54b) may also, or alternatively, be formed as a hollow frame member for retaining a battery pack 90 (e.g., rechargeable lithium-ion battery pack). In some embodiments the frame 14 may also house at least a portion of a motor 94 (FIG. 1) within the frame 14 (e.g., below the battery pack 90).

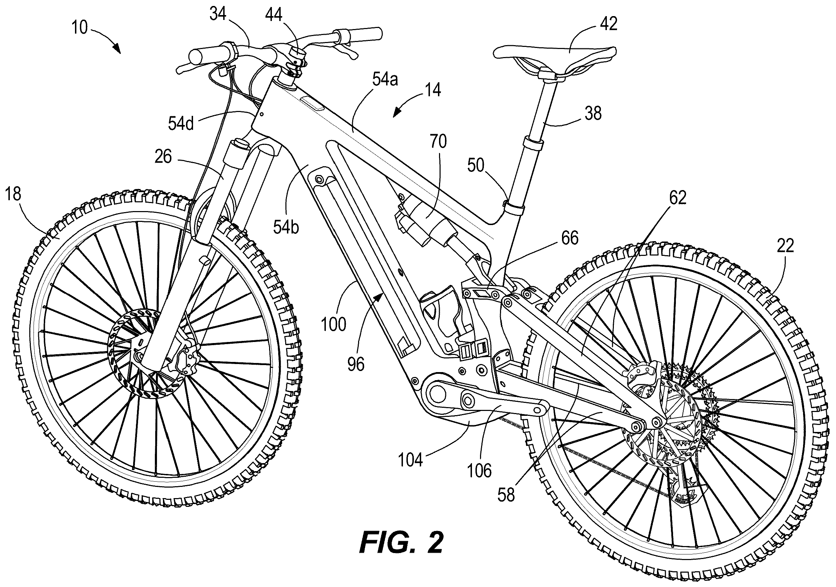

In the illustrated embodiment, the down tube member 54b defines a battery compartment or cavity 96 (FIG. 2) configured to receive and retain the battery pack 90 within the frame 14. In some embodiments, the bicycle 10 may include a cover 98 (FIG. 3) that is removably coupled to the down tube member 54b. The cover 98 may be configured to enclose the cavity 96 and secure the battery pack 90 within the cavity 96 of the down tube member 54b. As such, the cover 98 may be coupled to the down tube member 54b by a fastening member 102 (e.g., screw or other fastening mechanism).

In the illustrated embodiment, an opening 100 to the cavity 96 is located along the side of the down tube member 54b, such that the battery pack 90 may be inserted laterally into the cavity 96. In other examples, the frame 14 may include an opening for example along a lower end of the down tube member 54b, or along a top end of the down tube member 54b, such that the battery pack 90 is inserted longitudinally into the cavity 96. In further examples, an opening may be along a top surface or a bottom surface of the down tube member 54b, such that the battery pack 90 is inserted vertically into the cavity 96.

The motor 94 may be arranged, for example, within a bottom portion of the down tube member 54b, such that the battery pack 90 is located above the motor 94. The bicycle 10 may also include a guard 104 (FIG. 1) coupled to the down tube member 54b. The guard 104 may be a motor housing configured to protect the motor 94.

The motor 94 may be electrically connected to the battery pack 90 and may be configured to receive electricity from the battery pack 90. In these examples, the motor 94 may be an electric motor. The motor 94 may partially or entirely motively power the bicycle 10. In some examples, the motor 94 may provide assistance to the user and may be coupled, for example, to a set of crank arms 106 (FIG. 1). In some embodiments, when the user stops pedaling, the motor 94 may deactivate and stop providing assistance to the user. In some embodiments, the bicycle 10 may be operated in a mode that allows the bicycle 10 to be operated without assistance from the motor 94.

With reference to FIGS. 4-8, the bicycle 10 may include a storage system located partially or entirely within the overall frame 14. The storage system may include a bracket 110 and/or a container 114. The bracket 110 and/or the container 114 may be disposed, for example, within the cavity 96 of the down tube member 54b, or within a cavity of any other hollow tube member of the frame 14.

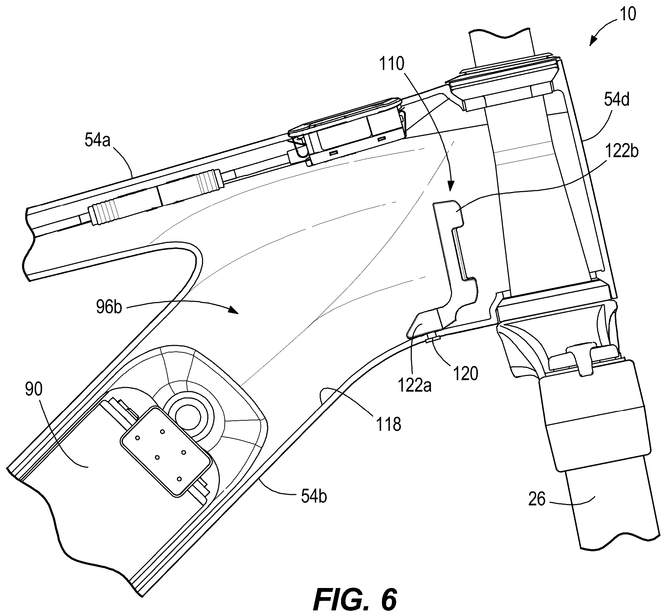

In some embodiments, the bracket 110 may be coupled (e.g., releasably coupled) to an interior surface 118 (FIG. 6) of the down tube member 54b by one or more fastening members 120 (e.g., screws, bolts, clips, etc.). In some embodiments, the bracket 110 may be coupled to the interior surface 118 along an upper end of the down tube member 54b, although the bracket 110 may be coupled to other locations of the down tube member 54b or other tube member of the frame 14.

The container 114 may be sized and shaped to store and retain various items (e.g., tools or other accessories for the bicycle 10, personal items, etc.) within the down tube member 54b of the frame 14 (or other frame member). In some embodiments, the container 114 may have one or more soft and/or flexible regions to permit the container 114 to be inserted and/or folded into the frame 14 via the opening 100. In other embodiments, the container 114 may be entirely rigid. To secure the container 114 within the frame 14, in some embodiments the container 114 may be magnetically attachable to the bracket 110, and/or may be in contact with and supported by one or more of the bracket 110 and the battery pack 90. As such, in some embodiments the bracket 110 may be positioned within the frame 14 such that the container 114 is disposed between (e.g., directly between) the battery pack 90 and the bracket 110.

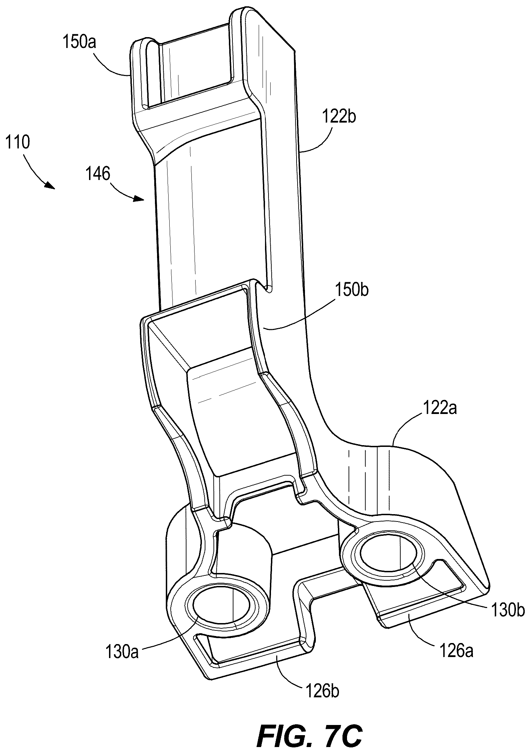

With reference to FIGS. 6-7D, the bracket 110 itself may include a first end 122a and a second (e.g., opposite) end 122b. The first end 122a of the bracket 110 may include one or more feet 126a, 126b with respective fastener holes 130a, 130b (FIG. 7C). The fastener holes 130a, 130b may be sized and shaped to receive the fastening members 120 to couple the bracket 110 to the interior surface 118 of the down tube member 54b. The second end 122b of the bracket 110 may be a free end located opposite the first end 122a of the bracket 110. As such, the second end 122b of the bracket 110 may be supported along the interior surface 118 by the first end 122a of the bracket 110 and the feet 126a, 126b. Other embodiments of the bracket 110 may include other numbers of feet and fastener holes than that illustrated, or may include a shape other than that illustrated. In some examples, the bracket 110 may not include feet, and/or may not include fastener holes.

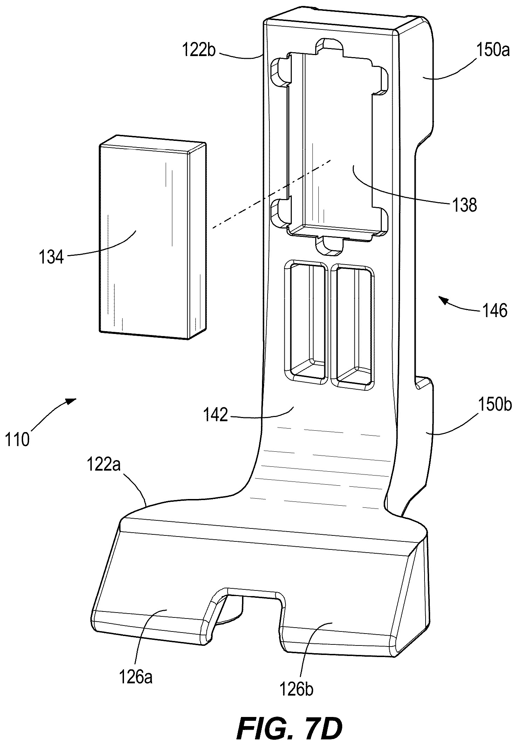

With continued reference to FIGS. 6-7D, the bracket 110 may include at least one first magnetic member 134 disposed on and/or within the bracket 110 (e.g., at the second end 122b of the bracket 110). The first magnetic member 134 may be a magnet. In some embodiments, the first magnetic member 134 may be disposed within a recess 138 (FIG. 7D) defined within the second end 122b of the bracket 110. The first magnetic member 134 may be held via a friction fit within the recess 138, or for example may be coupled with one or more fasteners within the recess 138.

In the illustrated embodiment, the first magnetic member 134 may be received within the recess 138 such that a front surface of the first magnetic member 134 is flush with a front surface 142 of the bracket 110. In other embodiments, the first magnetic member 134 may be positioned to extend outward from the front surface 142 of the bracket 110, or may be positioned to be recessed relative to the front surface 142.

In other embodiments, the bracket 110 may not include the recess 138. Rather, the first magnetic member 134 may be attached directly to the front surface 142 or other area of the bracket 110 (e.g., via one or more fasteners).

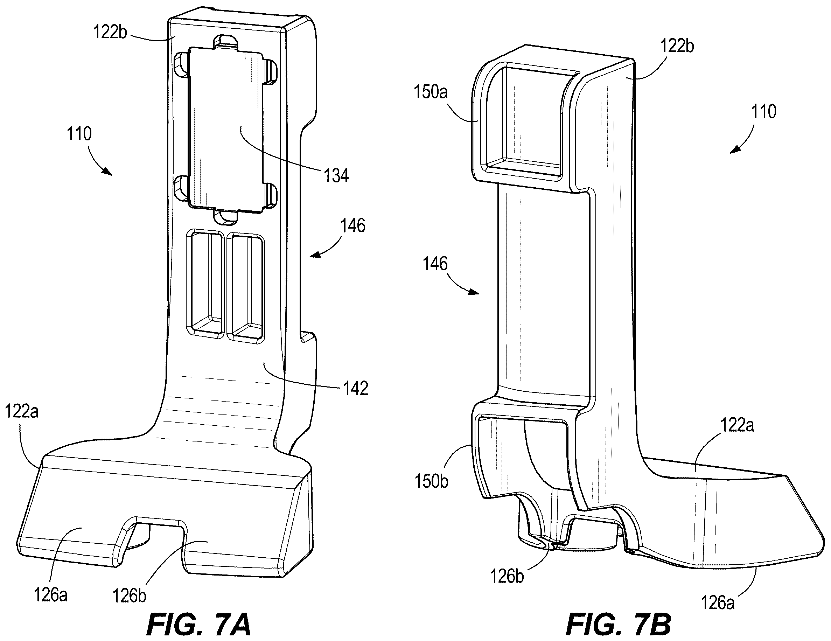

With reference to FIGS. 7A-7D, in some examples the bracket 110 may define one or more cable routing channels 146. The cable routing channel 146 may be defined, for example, as a channel between first and second protrusions 150a, 150b extending from a rear portion of the second end 122b of the bracket 110. As such, the cable routing channel 146 may be sized and shaped to route one or more of the cables 88 (FIG. 5) through the down tube member 54b. The cables 88 may be disposed and retained between the protrusions 150a, 150b when received within the cable routing channel 146. In many examples, the cable routing channel 146 can route one or more of the cables 88 (FIG. 5) so as not to obstruct the placement of the container 114 within the frame 14.

Other embodiments may include other numbers and arrangements of cable routing channels or cable routing features other than that illustrated. For example, in some embodiments the bracket 110 may include one or more cable routing channels in other locations than that illustrated (e.g., along the front of the bracket 110, and/or along the feet 126a, 126b), and/or may include one or more cable routing channels defined as a through-openings that extend entirely through the bracket 110 (rather than being an open channel as illustrated in FIGS. 7B-7D).

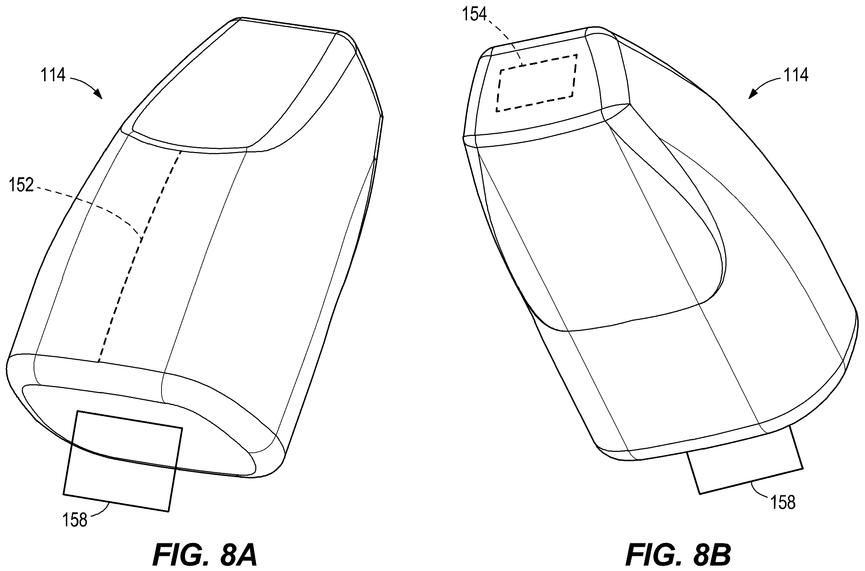

With reference to FIGS. 8A and 8B, in some embodiments the container 114 may be a flexible storage bag that is able to conform to the size and contour of the frame 14 (and for example other sized or shaped frames 14). In other embodiments, the container 114 may be an inflexible storage bag (e.g., formed from rigid plastic or other material) that is sized and shaped to fit within a particular frame size and/or shape (e.g., is custom to a particular frame shape and/or size).

In some embodiments, the container 114 may be water resistant to protect the stored items from liquid that may enter the bicycle 10. In other embodiments, the container 114 may be formed from perforated material, or mesh, that is not water resistant. The container 114 may be formed from any suitable material for desired use, and may include for example one or more pouches, cavities, or other storage areas. In some examples, the container 114 may include one or more fastening systems, such as a zipper 152 (FIG. 8A), hooks, loops, buttons, covers, lids, drawstrings, or other features that permit the container 114 to be opened and/or closed.

As described above, the container 114 may be magnetically attachable to the first magnetic member 134 of the bracket 110 (e.g., to allow the container 114 to easily be attached and removed). Accordingly, the container 114 may include at least one second magnetic member 154 (FIG. 8B) coupled thereto. The second magnetic member 154 (shown schematically in FIG. 8B) may be a ferromagnetic material (e.g., steel) that allows the container 114 to be attracted to the first magnetic member 134 of the bracket 110. In other examples, the first magnetic member 134 may be a ferromagnetic material and the second magnetic member 154 may be a magnet.

While the second magnetic member 154 is illustrated in a particular location in FIG. 8B, the second magnetic member 154 may be located in other positions, and/or may have other sizes and shapes than that illustrated. In some embodiments, the second magnetic member 154 may be coupled to the container 114 (e.g., via friction fit, fasteners, etc.). The second magnetic member 154 may be disposed within a recess along the container 114 (e.g., similar to how the first magnetic member 134 may sit in the recess 138). In other embodiments, the second magnetic member 154 may be coupled to an exterior surface of the container 114, and/or may project from the exterior surface of the container 114.

In some embodiments, and with reference to FIGS. 8A and 8B, the container 114 may include at least one tab 158 (illustrated schematically). The tab 158 may be grasped by the user to remove the container 114 from the down tube member 54b. While the illustrated tab 158 is located along one end of the container 114, in other embodiments the tab 158 may be located along the side of the container 114, or along the opposite end of the container 114.

To install the container 114 within the down tube member 54b, the cover 98 may first be removed from the down tube member 54b. In some embodiments, the battery pack 90 may then be removed from the cavity 96, and the container 114 may be pushed or otherwise inserted into the cavity 96 via the opening 100 and slid upward within the cavity 96 toward the head tube member 54d until the second magnetic member 154 of the container 114 contacts and magnetically attaches to the first magnetic member 134 of the bracket 110. As such, the container 114 may be disposed within a portion of the cavity 96 that is not covered by the cover 98. The battery pack 90 may then be reinserted into the cavity 96 (such that the container 114 is positioned and/or compressed between the end of the battery pack 90 and the bracket 110) and the cover 98 may then be coupled to the down tube member 54b. In other embodiments, the battery pack 90 may remain in the cavity 96 at all times while the container 114 is inserted and attached to the second magnetic member 154, and the container 114 may be pushed or otherwise inserted into the space between the end of the battery pack 90 and the bracket 110.

To remove the container 114, the user may grasp the tab 158 and pull the container 114 out of the down tube member 54b of the frame 14 (or may otherwise grasp and pull / remove the container 114). This motion may be sufficient itself to decouple the first magnetic member 134 and the second magnetic member 154. Accordingly, a user may conveniently remove and attach the container 114 as desired (e.g., to add or remove items form the container 114, or replace the container 114 with a different container 114).

While the storage system described above is illustrated in combination with a bicycle 10 with a battery pack 90, the storage system may be used with any bicycle 10, including for example a bicycle 10 that does not include a battery pack 90. For example, the bracket 110 may be coupled to an interior surface of a frame member (e.g., down tube, top tube, head tube, seat tube, or other tube) of a bicycle, and the container 114 may be releasably coupled to the bracket 110 (e.g., with the same magnetic members described above). The container 114 may not contact or otherwise be positioned next to a battery pack 90. Instead, the container 114 may rest for example on a frame surface, or otherwise be positioned partially or entirely within a frame member.

Additionally, in some embodiments, at least a portion of the bracket 110 and/or the container 114 may extend out of the frame 14, and may be exposed outside of the frame 14. For example, instead of being coupled to an interior surface of a frame member, the bracket 110 may instead be coupled to an exterior surface of a frame member, and the container 114 may similarly be releasably coupled (e.g., via magnetic members) to the bracket 110.

Some of the examples may be further described by reference to the following numbered clauses:
1. A bicycle comprising:
   a front wheel;
   a rear wheel;
   a frame coupled to and supported by the front wheel and the rear wheel, the frame having a frame member with a cavity defined therein;
   a bracket coupled to the frame member and disposed within the cavity, the bracket having a magnetic member; and
   a container disposed within the cavity, the container attachable to the magnetic member to be secured within the cavity.
2. The bicycle of clause 1, wherein the bracket includes a first end coupled to an interior surface of the frame member and a second, free end opposite the first end, and wherein the magnetic member is disposed on the second end of the bracket.
3. The bicycle of clause 1 or clause 2, wherein the magnetic member is a first magnetic member, and wherein the container includes a second magnetic member attracted to the first magnetic member.
4. The bicycle of any of the preceding clauses, wherein the container is a flexible storage bag.
5. The bicycle of any of the preceding clauses, wherein the container is water resistant.
6. The bicycle of any of the preceding clauses, wherein the frame member is a down tube member of the frame.
7. The bicycle of any of the preceding clauses, further comprising a battery disposed within the cavity, and wherein the container is positioned between the battery and the bracket.
8. The bicycle of clause 7, further comprising a cover removably coupled to the frame member to enclose the cavity and secure the battery within the cavity.
9. The bicycle of any of the preceding clauses, wherein the container includes a tab for removal of the container from the cavity.
10. The bicycle of any of the preceding clauses, wherein the bracket includes a cable routing channel configured to route at least one cable through the frame member, wherein the cable routing channel is defined between two protrusions formed on the bracket.
11. The bicycle of any of the preceding clauses, wherein the bracket includes a recess defined therein and configured to receive the magnetic member such that the magnetic member is flush with a surface of the bracket.
12. A bicycle comprising:
   a front wheel;
   a rear wheel;
   a frame coupled to and supported by the front wheel and the rear wheel, the frame having a frame member with a cavity defined therein; and
   a bracket coupled to the frame member and disposed within the cavity, the bracket having a magnetic member and a cable routing channel configured to route at least one cable through the frame member.
13. The bicycle of clause 12, further comprising a container disposed within the cavity, the container attachable to the magnetic member.
14. The bicycle of clause 13, wherein the magnetic member is a first magnetic member, and wherein the container includes a second magnetic member attracted to the first magnetic member.
15. The bicycle of clause 14, wherein the bracket includes a first end coupled to the frame member and a second, free end opposite the first end, and wherein the first magnetic member is disposed on the second end of the bracket.
16. The bicycle of any of clauses 13-15, wherein the container includes a tab for removal of the container from the cavity.
17. The bicycle of any of clauses 13-16, wherein the container is a flexible storage bag.
18. The bicycle of any of clauses 13-17, wherein the container is water resistant.
19. The bicycle of any of clauses 12-18, wherein the frame member is a down tube member of the frame.
20. The bicycle of any of clauses 12-19, wherein the cable routing channel is defined between two protrusions formed on the bracket such that the at least one cable is retained between the two protrusions when received within the cable routing channel.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Various features and advantages of the disclosure are set forth in the following claims.

## Claims

1. A bicycle comprising:
a front wheel;
a rear wheel;
a frame coupled to and supported by the front wheel and the rear wheel, the frame having a frame member with a cavity defined therein;
a bracket coupled to the frame member and disposed within the cavity, the bracket having a magnetic member; and
a container disposed within the cavity, the container attachable to the magnetic member to be secured within the cavity.

2. The bicycle of claim 1, wherein the bracket includes a first end coupled to an interior surface of the frame member and a second, free end opposite the first end, and wherein the magnetic member is disposed on the second end of the bracket.

3. The bicycle of claim 1 or claim 2, further comprising a battery disposed within the cavity, and wherein the container is positioned between the battery and the bracket.

4. The bicycle of claim 3, further comprising a cover removably coupled to the frame member to enclose the cavity and secure the battery within the cavity.

5. The bicycle of any of the preceding claims, wherein the bracket includes a cable routing channel configured to route at least one cable through the frame member, wherein the cable routing channel is defined between two protrusions formed on the bracket.

6. The bicycle of any of the preceding claims, wherein the bracket includes a recess defined therein and configured to receive the magnetic member such that the magnetic member is flush with a surface of the bracket.

7. A bicycle comprising:
a front wheel;
a rear wheel;
a frame coupled to and supported by the front wheel and the rear wheel, the frame having a frame member with a cavity defined therein; and
a bracket coupled to the frame member and disposed within the cavity, the bracket having a magnetic member and a cable routing channel configured to route at least one cable through the frame member.

8. The bicycle of claim 7, further comprising a container disposed within the cavity, the container attachable to the magnetic member.

9. The bicycle of any of claims 1, 2 or 8, wherein the magnetic member is a first magnetic member, and wherein the container includes a second magnetic member attracted to the first magnetic member.

10. The bicycle of claim 9, wherein the bracket includes a first end coupled to the frame member and a second, free end opposite the first end, and wherein the first magnetic member is disposed on the second end of the bracket.

11. The bicycle of any of claims 1-6 or 8-10, wherein the container includes a tab for removal of the container from the cavity.

12. The bicycle of any of claims 1-6 or 8-11, wherein the container is a flexible storage bag.

13. The bicycle of any of claims 1-6 or 8-12, wherein the container is water resistant.

14. The bicycle of any of the preceding claims, wherein the frame member is a down tube member of the frame.

15. The bicycle of any of claims 7-14, wherein the cable routing channel is defined between two protrusions formed on the bracket such that the at least one cable is retained between the two protrusions when received within the cable routing channel.
